# EUROPEAN PATENT APPLICATION

(11) **EP 4 727 218 A1**
(43) Date of publication of application: **15.04.2026**
(21) Application number: 24819255.1
(22) Date of filing: 31.05.2024
(51) Int. Cl.: H04W 52/02, H04W 72/0457, H04W 84/12

(54) **COMMUNICATION DEVICE, CONTROL METHOD, AND PROGRAM**

(30) Priority: 08.06.2023 JP 2023095004
(71) Applicant: Canon Kabushiki Kaisha, Tokyo, 146-8501 (JP)
(72) Inventor: TAKADA Tomoyuki, Tokyo 146-8501 (JP); OTANI Tomoya, Tokyo 146-8501 (JP)
(74) Representative: Canon Europe Limited
(86) International application number: PCT/JP2024/019970
(87) International publication number: WO 2024/253025

(57) **Abstract**

A communication apparatus that provides an external apparatus with a network identified by a first BSSID and a network identified by a second BSSID is configured to, in a case where the communication apparatus uses a predetermined power saving mechanism and the communication apparatus functions as a Multi-Link Device, MLD, that performs Multi-Link communication with another communication apparatus, execute control to transmit a Beacon frame containing the first BSSID on a channel through which a first network is being provided. On the other hand, the communication apparatus is configured not to transmit a Beacon frame containing the second BSSID on a channel through which the communication apparatus is providing a second network.

## Description

### Technical Field

The present invention relates to a communication apparatus that transmits and receives data.

### Background Art

In recent years, with an increase in the amount of data being transmitted and received, the development of communication technologies, such as a wireless local area network (LAN), is progressing. The Institute of Electrical and Electronics Engineers (IEEE) 802.11 series is known as major wireless LAN communication standards. The IEEE 802.11 series includes standards, such as IEEE 802.11a, b, g, n, ac, and ax.

The development of the IEEE 802.11be standard, which is the successor standard to IEEE 802.11ax, is progressing. A function, such as Multi-Link communication that allows an AP and an STA to establish a plurality of links with different frequency channels and communicate in parallel, is under consideration as a new function in the IEEE 802.11be standard. PTL 1 describes a mechanism for establishing a plurality of links for Multi-Link communication.

### Citation List

### Patent Literature

PTL 1: Japanese Patent Laid-Open No. 2021-103805

### Summary of Invention

### Technical Problem

In the Extreme High Throughput (EHT) TG, it is being considered to operate communication apparatuses that support the IEEE 802.11be standard in frequency bands, such as 2.4 GHz band, 4.9 GHz and 5 GHz bands, and 6 GHz band. TG is an abbreviation for Task Group. Discussions of the successor standard to IEEE 802.11be have also begun. In the Ultra High Reliability (UHR) SG that considers the successor standard, an increase in power consumption of access points in the successor standard has been identified as an issue, and it is being considered to implement power saving operations of some kind in access points.

However, the specific mechanism of the power saving operation has not been considered. Here, an access point that performs Multi-Link communication achieves Multi-Link communication in a manner such that a component of a Multi-Link Upper MAC sublayer centrally manages lower sublayers. This lower sublayer is a combination of a component serving as a Lower MAC sublayer and PHY that is in a one-to-one correspondence with the component. The access point has a component of a non-Multi-Link Upper MAC sublayer so as to be able to communicate with STAs that support only Single-Link communication, and the access point can also achieve Single-Link communication. A combination of the components of the non-Multi-Link Upper MAC sublayer and Lower MAC sublayer and PHY associated with the components logically functions like an existing single access point. This single access point can also be regarded as an affiliated access point managed under a Multi-Link function, so this single access point is also referred to as Affiliated AP.

There is an issue that, when a plurality of affiliated APs is always activated, electric power saving increases. On the other hand, when power saving operations, such as an intermittent operation, for example, stopping power supply to the Affiliated APs for a certain period of time, are simply performed, an issue may occur in connecting to STAs supporting old standards, typically, the 802.11ax standard and the like that are previous standards to the successor standard. Hereinafter, STAs that support the old standards and do not support a new standard are referred to as Legacy STAs for convenience.

The present invention is made to address at least one of the above issues. It is an object of the present invention to provide a mechanism that adheres to old standards and that allows an access point to perform a power saving operation while suppressing the occurrence of connection issues with Legacy STAs in an environment where Legacy STAs are mixed. As for another aspect of the present invention, it is an object to provide a mechanism for an access point to perform a power saving operation.

### Solution to Problem

As an aspect of the present invention, a communication apparatus provides an external apparatus with a first network identified by a first Basic Service Set Identifier, first BSSID, and a second network identified by a second BSSID. The communication apparatus includes a communication control unit configured to, in a case where the communication apparatus uses a predetermined power saving mechanism and the communication apparatus functions as a Multi-Link Device, MLD, that performs Multi-Link communication with another communication apparatus, execute control to transmit a Beacon frame containing the first BSSID on a channel through which the communication apparatus is providing the first network and not to transmit a Beacon frame containing the second BSSID on a channel through which the communication apparatus is providing the second network. Advantageous Effects of Invention

According to the aspect of the present invention, an access point is able to perform a power saving operation while suppressing the occurrence of connection issues with Legacy STAs. According to another aspect of the present invention, the access point is able to perform a power saving operation.

### Brief Description of Drawings

[Fig. 1] Fig. 1 is a diagram that shows an example of the configuration of a communication system.
[Fig. 2] Fig. 2 is a diagram that shows an example of the hardware configuration of a communication apparatus (an AP MLD, a non-AP MLD, or a Legacy STA).
[Fig. 3] Fig. 3 is a diagram that shows an example of the functional configuration of the communication apparatus (the AP MLD or the non-AP MLD).
[Fig. 4] Fig. 4 is a sequence diagram that shows an example of Multi-Link communication in an embodiment.
[Fig. 5] Fig. 5 is a flowchart that shows an example of notification control in an AP 101.
[Fig. 6] Fig. 6 is a flowchart that shows an example of connection control in an STA 102.
[Fig. 7] Fig. 7 is a diagram that shows an example of the processing procedure for Multi-Link Setup.
[Fig. 8] Fig. 8 is a flowchart that shows an example of connection control in an STA 103.
[Fig. 9] Fig. 9 is an example of a settings screen that the AP 101 provides to a user.

### Description of Embodiments

Hereinafter, embodiments will be described in detail with reference to the attached drawings. The following embodiments are not intended to limit the invention as defined in the claims. A plurality of features is described in each embodiment; however, not all the plurality of features is indispensable to the invention, and the plurality of features may be used in any combination. Like reference signs denote the identical or similar components in the attached drawings, and the repeated description is omitted.

### <First Embodiment>

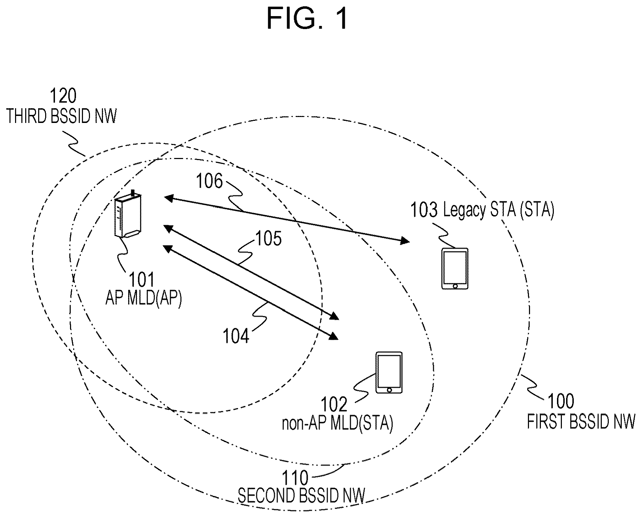

Fig. 1 shows an example of the configuration of a network of the present embodiment. The network of the present embodiment is configured to include one access point device (hereinafter, simply referred to as AP, AP STA, or access point) and two station devices (hereinafter, simply referred to as STAs, Non-AP STAs, or stations).

An AP 101 and an STA 102 are configured to be capable of performing communication of wireless frames in compliant with the IEEE 802.11bn standard that is a successor standard to the IEEE 802.11be standard targeting a maximum transmission speed of 46.08 Gbps. On the other hand, an STA 103 is a station device that supports standards (for example, IEEE 802.11ac, n, g, b, and a) that do not support Multi-Link communication and prior to IEEE 802.11be.

IEEE is an abbreviation for Institute of Electrical and Electronics Engineers. In IEEE 802.11bn, which is the successor standard to IEEE 802.11be, high-reliability communication, low-latency communication, and improved throughput during congestion are presented as main features. One of the targets of 802.11bn is to reduce power consumption at APs. Wireless frames that are transmitted and received under the successor standard are also referred to as Ultra High Reliability (UHR) PPDUs. PPDU is an abbreviation for PLCP Protocol Data Unit. PLCP is an abbreviation for Physical Layer Convergence Protocol.

The name UHR is provided for convenience in consideration of the target to be achieved by the successor standard and attractive features in the standard and can be another name in a state where the development of the standard has been completed. The name IEEE 802.11bn can also similarly be another name in a state where the development of the standard has been completed. On the other hand, it should be noted that the specification and the attached claims are fundamentally applicable to all successor standards to the 802.11be standard.

Returning to the description in Fig. 1, the AP 101 is an access point that supports a multiband function providing networks on a plurality of different frequency channels. In the present embodiment, the case where the AP 101 is a tri-band access point that provides a 2.4 GHz band network (hereinafter, also referred to as NW) 100, a 5 GHz band NW 110, and a 6 GHz band NW 120 is illustrated. The NW 100 provided by the AP 101 is a network that operates on any channel in the 2.4 GHz band and is a network of which the BSSID for identifying the network is the first BSSID. BSSID is an abbreviation for Basic Service Set Identifier. BSS is an abbreviation for Basic Service Set. The NW 110 provided by the AP 101 is a network that operates on any channel in the 5 GHz band and is a network of which the BSSID is the second BSSID. The NW 120 provided by the AP 101 is a network that operates on any channel in the 6 GHz band and is a network of which the BSSID is the third BSSID. The NW 100 is an example of a first network, and the NWs 110, 120 are examples of a second network.

Furthermore, the AP 101 and the STA 102 of the present embodiment can perform Multi-Link communication to establish a plurality of communication links between devices for communication. Hereinafter, a communication link is simply referred to as a link. The AP 101 that performs Multi-Link communication is also referred to as an AP Multi-Link Device (MLD) 101. The STA 102 that performs Multi-Link communication is also referred to as a non-AP MLD 102.

In the present embodiment, the STA 103 that supports only standards up to 802.11ax and does not support the 802.11be and subsequent standards, that is, the STA 103 that does not support the Multi-Link function, is also referred to as a Legacy STA 103 for convenience.

For example, the AP 101 can establish a 2.4 GHz band link 104 with the STA 102 for communication. The AP 101 and the STA 102 can, for example, establish the 5 GHz band link 105 for communication in parallel with this. In this case, the STA 102 performs Multi-Link communication for communication through the link 105 in parallel with the link 104. In this way, the AP 101 can improve the throughput in communication with the STA 102 by establishing links of a plurality of different frequency channels with the STA 102.

The Legacy STA 103 can, for example, establish a 2.4 GHz band link 106 with the AP 101 for communication. In the present embodiment, establishing only one link between devices and performing communication over the established single link is referred to as Single-Link communication.

In an example, Fig. 1 shows a communication system including one AP MLD 101 and two STAs (non-AP MLD 102 and Legacy STA 103); however, the number of devices may be more than those illustrated. It is assumed that the AP MLD 101 and the non-AP MLD 102 support UHR PPDU communication (transmission and reception). In addition to this, the AP MLD 101 and the non-AP MLD 102 can be configured to support communication of PPDUs of legacy standards that are standards prior to the UHR standard. Specifically, the AP 101 and the STA 102 can also be configured to support the transmission and reception of PPDUs of the IEEE 802.11a, b, g, n, ac, ax, and be standards and the like.

The AP 101 and the STAs 102, 103 are configured to be able to perform communication in the 2.4 GHz band, the 5 GHz band, and the 6 GHz band. The frequency bands used by the AP 101 and the STAs 102, 103 are not limited to these. For example, different frequency bands, such as the Sub-1 GHz band and the millimeter wave band, may be used. The AP 101 and the STA 102 can perform communication using bandwidths of 20 MHz, 40 MHz, 80 MHz, 160 MHz, 320 MHz, 540 MHz, and 640 MHz. The bandwidths used by each communication apparatus are not limited thereto. In the present embodiment, the case where the links 104, 105 for Multi-Link communication are links of different frequency bands is illustrated; however, the configuration is not limited thereto. The AP 101 can also perform Multi-Link communication with the STA 102 using a plurality of links in the same frequency band on different channels. In this case, the AP 101 is configured to provide a plurality of networks in the same frequency band on different channels. More specifically, a plurality of communication links may be established between devices for Multi-Link communication using W52 and 36ch in the 5 GHz band as a first link and W53 and 60ch in the same 5 GHz band as a second link. It is also applicable that links with the same frequency band and links with different frequency bands may be mixed.

The AP 101 and the STAs 102, 103 can be configured to support wireless communication based on other communication standards, such as Bluetooth (registered trademark), NFC, and Bluetooth (registered trademark) Low Energy (LE). NFC is an abbreviation for Near Field Communication. The AP 101 and the STA 102 can be configured to support wired communication using Ethernet (registered trademark) cables or wired communication using optical fibers. Specific examples of the AP 101 include a wireless LAN router and a personal computer (PC); however, the AP 101 is not limited thereto. The AP MLD 101 and the non-AP MLD 102 may also be information processing apparatuses, such as wireless chips, that support the transmission and reception of UHR PPDUs. In this case, a hardware circuit inside the wireless chip can be configured to execute various controls. A processor such as ASIP, a memory, and a hardware circuit within the wireless chip may be configured to cooperatively execute various processes. ASIP is an abbreviation for Application-specific instruction set processor.

Specific examples of the STA 102 and the STA 103 include wearable devices, such as a camera, a tablet, a smartphone, a PC, a mobile phone, a video camera, and smartglasses; however, the STA 102 and the STA 103 are not limited thereto.

By the way, the IEEE 802.11bn standard focuses on an increase in power consumption of access points as an issue, and it is being considered to implement power saving operations of some kind in access points. As described above, the AP MLD implements Multi-Link communication in a manner such that a component of a Multi-Link Upper MAC sublayer centrally manages lower sublayers. This lower sublayer is implemented by a combination of a component serving as a Lower MAC sublayer and PHY that is in a one-to-one correspondence with the component. The AP MLD has a component of a non-Multi-Link Upper MAC sublayer to enable communication with STAs that support only Single-Link communication. A combination of the components of the non-Multi-Link Upper MAC sublayer and Lower MAC sublayer and PHY associated with the components logically functions like an existing single access point. In other words, the combination of these components and PHY is used to implement Single-Link communication with Legacy STAs or the like.
This single access point can also be regarded as an affiliated AP managed under the Multi-Link function, so this single access point is also referred to as Affiliated AP.

Here, in the AP MLD, when a plurality of Affiliated APs is always activated, electric power saving increases. On the other hand, when power saving operations, such as an intermittent operation, for example, stopping power supply to the Affiliated APs for a certain period of time, are simply performed, an issue may occur in connecting to STAs only supporting standards prior to IEEE 802.11bn.

In light of this, the present embodiment provides a mechanism that allows an access point to perform a power saving operation while suppressing the occurrence of connection issues with Legacy STAs in an environment where Legacy STAs are mixed. Hereinafter, the description will be specifically made.

### <Hardware Configuration of Communication Apparatus>

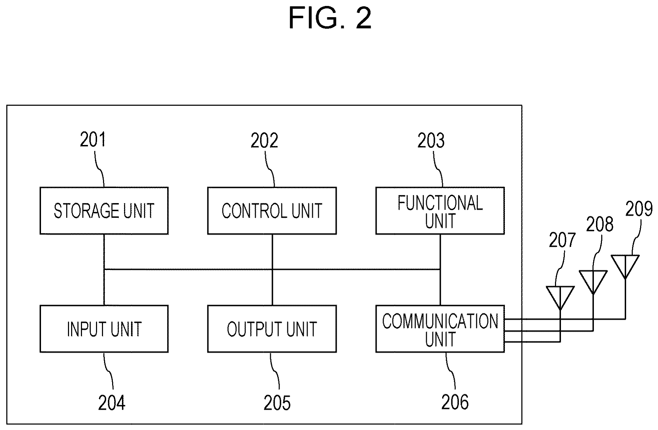

Fig. 2 shows an example of the hardware configuration of each of the communication apparatuses (the AP MLD 101, the non-AP MLD 102, and the Legacy STA 103). The communication apparatus includes a storage unit 201, a control unit 202, a functional unit 203, an input unit 204, an output unit 205, a communication unit 206, and antennas 207 to 209 as an example of its hardware configuration.

The storage unit 201 is made up of both of a ROM and a RAM or one of a ROM and a RAM, and stores various pieces of information, such as programs for executing various operations (described later) and communication parameters for wireless communication. RAM is an abbreviation for Random Access Memory. ROM is an abbreviation for Read Only Memory. Other than the memories, such as a ROM and a RAM, storage media, such as nonvolatile storage devices, including a hard disk drive, a solid state drive (SSD), and the like, may also be used as the storage unit 201.

The control unit 202 is made up of, for example, a processor such as a CPU and an MPU, an application specific integrated circuit (ASIC), a digital signal processor (DSP), or a field programmable gate array (FPGA). Here, CPU is an abbreviation for Central Processing Unit. MPU is an abbreviation for Micro Processing Unit. The control unit 202 controls the entire apparatus by running the programs stored in the storage unit 201 and operating the hardware circuit, such as ASIC. The control unit 202 may be configured to control the entire apparatus by cooperation of the programs and an Operating System (OS), stored in the storage unit 201.

The control unit 202 executes a predetermined process, such as image capturing, printing, and projection, by controlling the functional unit 203. The functional unit 203 is hardware for the apparatus to execute a predetermined process. When, for example, the communication apparatus is a camera, such as a digital still camera, or a smartphone with a camera, the functional unit 203 is an image capturing unit, and performs image capture processing of a surrounding image through a camera unit (not shown) of the communication apparatus. When, for example, the communication apparatus is a printer, the functional unit 203 is a printing unit and performs a printing process on a sheet, such as paper, based on print data obtained through wireless communication from an external source. When, for example, the communication apparatus is a projector or smartglasses, the functional unit 203 is a projection unit and performs a projection process of image data and picture data obtained through wireless communication from an external source. In the case of smartglasses, a projection surface is the retinas or the like of an end user. The data to be processed by the functional unit 203 may be data stored in the storage unit 201 or may be data communicated with other APs or STAs via the communication unit 206 (described later). Furthermore, the communication apparatuses, such as the AP 101, can also provide a network storage function, such as network attached storage (NAS). The function is provided to other communication apparatuses as a Web service, such as a network storage service. For example, a communication apparatus, such as an STA, connects to the network storage service provided by the AP MLD 101 or the like using a protocol, such as SMB, FTP, and WebDAV. Then, the communication apparatus, such as an STA, uploads files to the storage service and downloads files from the storage. The data communication for the uploads and downloads is implemented by communicating UHR PPDUs between devices.

The input unit 204 receives various operations from a user. The output unit 205 performs various outputs to the user. Here, an output by the output unit 205 includes, for example, at least one of display on a screen, audio output through a speaker, and vibration output. Both the input unit 204 and the output unit 205 may be implemented as one module like a touch panel. The output unit 205 functions as a display unit that presents information to the user. The input unit also functions as a receiving unit that receives a user operation.

The communication unit 206 controls wireless communication compliant with the IEEE 802.11 series and controls IP communication. In the present embodiment, the communication unit 206 can execute communication control to transmit and receive UHR PPDUs, which are wireless frames of the UHR standard, and PPDUs supporting standards prior to the UHR standard in cooperation with the antennas 207 to 209. The antennas 207 to 209 are antennas that can, for example, transmit and receive signals in at least one of the frequency bands including a sub-GHz band, a 2.4 GHz band, a 5 GHz band, a 6 GHz band, and a millimeter wave band.

When the communication apparatus supports the above-described NFC standard, Bluetooth standard, a wired communication standard, or the like, it is sufficient that the communication unit 206 is configured to control wireless communication and wired communication compliant with these communication standards. The communication unit 206 of each of the AP MLD 101 and the non-AP MLD 102 includes a hardware circuit that decodes or encodes signals communicated over each link. Each antenna and each hardware circuit are configured to be able to individually perform electric power control. The AP MLD 101 and the non-AP MLD 102 may be configured to include a communication unit corresponding to each link individually.

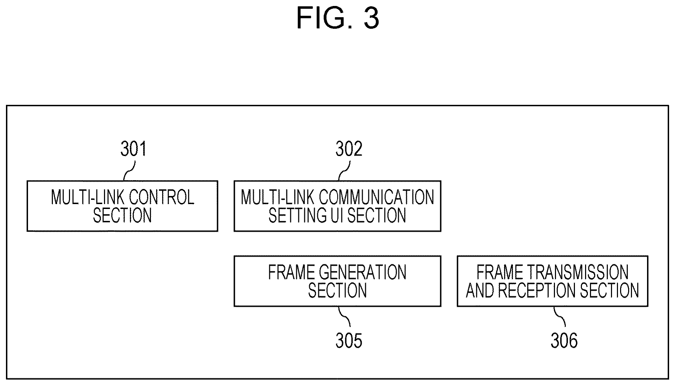

Next, the functional components of the AP MLD 101 and non-AP MLD 102 will be described with reference to Fig. 3. The communication apparatus such as the AP MLD 101 and the non-AP MLD 102 includes functional sections including a multi-link control section 301, a multi-link communication setting UI section 302, a frame generation section 305, and a frame transmission and reception section 306.

The multi-link control section 301 is a functional block that controls a communication initiation process for establishing one or more links used by the communication apparatus for wireless communication with a counterpart device, a link addition and deletion process after communication initiates, and a communication termination process for deleting all the links. A connection process is specifically composed of an Authentication process, an Association process, and a 4way-handshake process. In the case of the AP MLD 101, the counterpart device is an STA, such as the non-AP MLD 102. In the case of the non-AP MLD 102, the counterpart device is an AP, such as the AP MLD 101. The multi-link control section 301 also executes control regarding an AP power saving mode. Specifically, when the AP power saving mode is enabled, electric power control, such as stopping the power supply to the components that function as Affiliated APs, is performed. The fact that the AP power saving mode is enabled means that the AP MLD 101 uses the predetermined power saving mechanism.

The multi-link communication setting User Interface (UI) section 302 provides a settings screen as a UI for the user to input settings related to Multi-Link communication. The UI section 302 is a functional block that receives user operations on the settings screen via the input unit 204 and stores the settings in the storage unit 201 as operational settings of the communication apparatus.

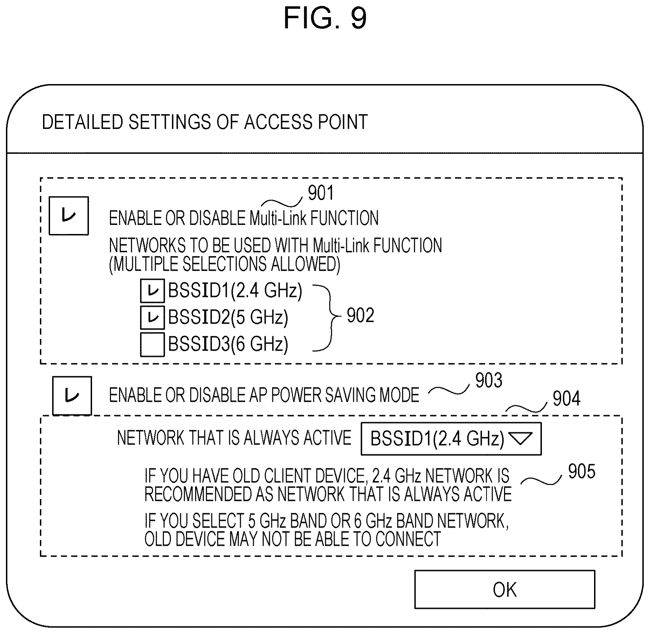

For example, the UI section 302 of the AP MLD 101 can display the settings screen shown in Fig. 9 and receive setting changes from the user. Fig. 9 is an example of the settings screen that the UI section 302 of the AP MLD 101 displays on the output unit 205. In Fig. 9, display items in the region indicated by the dashed lines are display items that are displayed only in modifications (described later). Therefore, the description thereof will be omitted in the first embodiment.

A display item 903 is a checkbox for setting whether to enable or disable the AP power saving mode. A user can change whether to enable or disable the AP power saving mode by operating the checkbox. When the UI section 302 detects that the user selects the OK button after the change operation, the UI section 302 stores the operational setting corresponding to the change operation (setting to enable or disable the AP power saving mode) in the storage unit 201. The operational setting will be referred to as needed in the flowchart (described later).

The UI section 302 of the AP MLD 101 further functions as an HTTP server and provides Web content, corresponding to the settings screen and provided by itself, to the connected STA. For example, the AP MLD 101 provides Web content, corresponding to the settings screen described in Fig. 9, to the connected STA. The STA displays a settings screen as a Web screen based on the received Web content. The STA transmits, to the HTTP server, information that identifies the operations performed through display items on the Web screen. Transmission can be performed using a method, such as a POST method. The UI section 302 changes the operational settings stored in the storage unit 201 based on the information as needed.

Returning to the description of Fig. 3, the frame generation section 305 is UHR PPDUs that are wireless frames for communication with an external device or a block to be generated. The frame transmission and reception section 306 transmits the wireless frames generated by the frame generation section 305 and receives wireless frames from a counterpart apparatus. In the case of the non-AP MLD 102, the non-AP MLD 102 transmits Probe Request frames, Association Request frames, and data frames to the AP. The non-AP MLD 102 also transmits Authentication Request frames and other frames for a connection process to the AP.

In the case of the AP MLD 101, the AP MLD 101 transmits Beacon frames, Probe Response frames, Association Response frames, and data frames to the STA 102. The AP MLD 101 transmits Association Request frames, Authentication Request frames, other frames for a connection process, and the like, to the STA.

The Legacy STA 103 includes a Single-Link control section for establishing a single link with the AP, instead of the multi-link control section 301, and differs from the non-AP MLD 102 in that the Legacy STA 103 performs Single-Link communication. In other words, the Legacy STA 103 is an STA that cannot perform Multi-Link communication but supports Single-Link communication with Affiliated APs.

### <Connection Process>

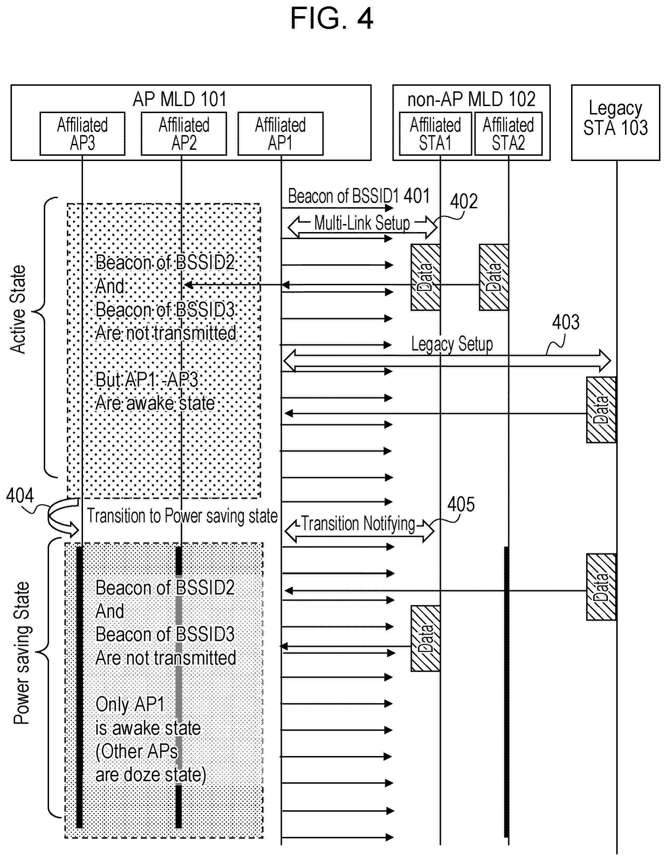

Next, an example of Multi-Link communication in the first embodiment will be described with reference to the sequence diagram of Fig. 4. Fig. 4 illustrates a processing procedure when the AP MLD 101 is configured with the AP power saving mode enabled. In the present embodiment, two states, that is, Active State and Power Saving State, are used in the AP power saving mode. The Active State is a State where all Affiliated APs (Affiliated AP1 to AP3) are caused to operate in an awake state. The Power Saving State is a State intended to reduce power consumption per unit time compared to the Active State. The AP MLD 101 of the present embodiment is assumed to reduce power consumption by transitioning to the Power Saving State and then limiting the power supply to the Affiliated AP2 and the Affiliated AP3 and causing the Affiliated AP2 and the Affiliated AP3 to operate in a doze state. On the other hand, to ensure that the Legacy STA can perform data communication without issues, the AP MLD 101 causes the Affiliated AP1 to operate in the awake state even after transitioning to the Power Saving State. Setting the Affiliated AP2 and AP3 to the doze state specifically means stopping the power supply to the circuit for transmitting and receiving frames for the Affiliated AP2 and AP3 to change into a state where frames are not transmitted or received. The Active State is an example of a first state that is an operational state of the predetermined power saving mechanism. The Power Saving State is an example of a second state that is an operational state of the predetermined power saving mechanism.

First, the operation of the AP MLD 101 in the Active State will be described. The AP 101 regularly transmits a Beacon 401 identified by the above-described BSSID1. The Beacon 401 of the Affiliated AP1 is transmitted in a non-high-throughput (non-HT) PPDU format so that the Legacy STA receiving the frame can decode the frame. In other words, the Beacon frame 401, as a Medium Access Control (MAC) frame, is regularly transmitted to the outside as a wireless frame in the non-HT PPDU format.

At this time, the AP MLD 101 causes the Affiliated AP2 and AP3 to operate in the awake state. However, the AP MLD 101 executes control to deliberately not transmit a Beacon of the Affiliated AP2, that is, a Beacon identified by BSSID2, and a Beacon of the Affiliated AP3, that is, a Beacon identified by BSSID3.

The non-AP MLD 102 receiving the Beacon indicated by 401 establishes a plurality of different links with the AP MLD 101 based on the procedure of Multi-Link Setup (described later) (402). Information on the other Affiliated AP2 and AP3 that are being operated in the awake state by the AP MLD 101 is notified to the STA as needed through the procedure of Multi-Link Setup and is used to, for example, select the links to be established as needed. When the setup is complete, the AP MLD 101 and the non-AP MLD 102 are able to perform Multi-Link communication. For example, the non-AP MLD 102 performs Multi-Link communication, such as simultaneously transmitting data using two communication links and using one link for data transmission while using another link for data reception. Here, the case where the link 104 and the link 105 described in Fig. 1 are established is illustrated.

On the other hand, the Legacy STA 103 executes the procedure of Legacy Setup to establish Single-Link communication. At this time, due to the above-described control, Beacons of the Affiliated AP2 and AP3 are not transmitted. Therefore, when the Legacy STA 103 searches for APs that are connection candidates, the search result is that the Affiliated AP1 is found but the Affiliated AP2 and AP3 are not found. Therefore, the Legacy STA 103 attempts a Legacy Setup for the found Affiliated AP1 or the like to establish Single-Link communication. When the setup is complete, the Affiliated AP1 and the Legacy STA 103 are able to perform Single-Link communication using one link.

In this way, in the present embodiment, the AP MLD 101 is controlled so as not to transmit Beacons of Affiliated APs that can enter the doze state in the Power Saving State. Therefore, it is possible to prevent Affiliated APs that can enter the doze state from being detected by the Legacy STA.

Next, the transition to the Power Saving State will be described. The AP MLD 101 determines whether the conditions for transitioning to the Power Saving State, for example, the amount of data being transmitted and received becomes smaller than or equal to a predetermined amount, are satisfied. When the AP MLD 101 determines that the conditions for transitioning to the Power Saving State are satisfied, the AP MLD 101 executes a transition process to transition to the Power Saving State (404).

In the transition process, for example, power control to change the Affiliated AP2 and AP3 to the doze state is executed, and a Transition notification indicating a state transition is transmitted to the non-AP MLD with which Multi-Link communication is established (405). The non-AP MLD receiving the Transition notification executes power control on the STA side based on the notification. In the present embodiment, in an example, the case where the non-AP MLD 102 sets the Affiliated STA102 to the doze state and uses only the link 104 as a link for data communication is illustrated.

Then, after transitioning to the Power Saving State, the AP MLD 101 continues to cause the Affiliated AP1 to operate in the awake state while transmitting the Beacon of BSSID1. Therefore, the Legacy STA 103 can perform existing Single-Link communication without being aware of whether the AP MLD 101 transitions to the Power Saving State.

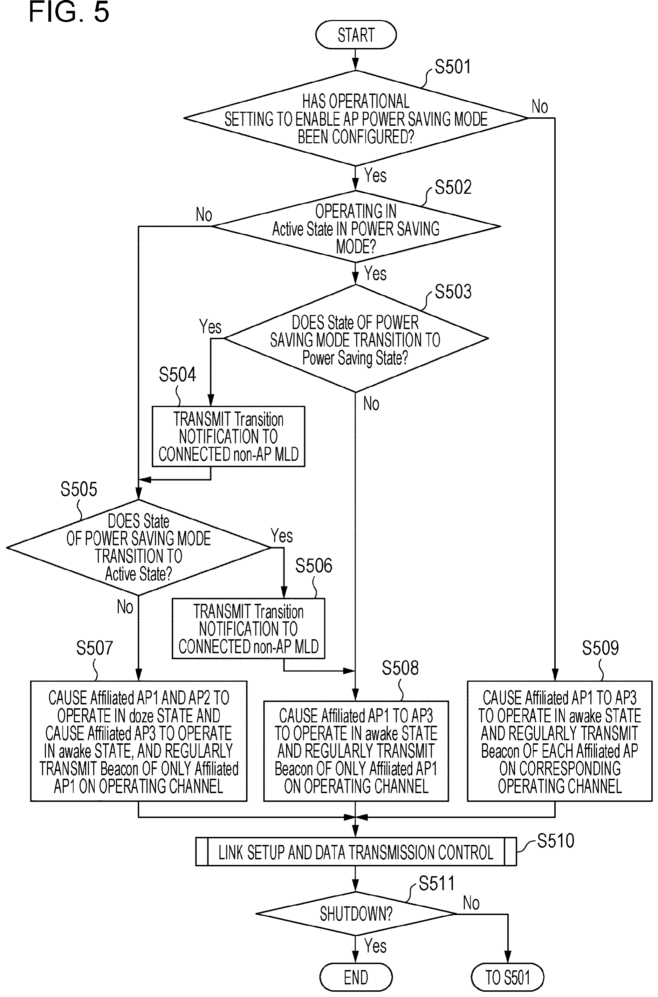

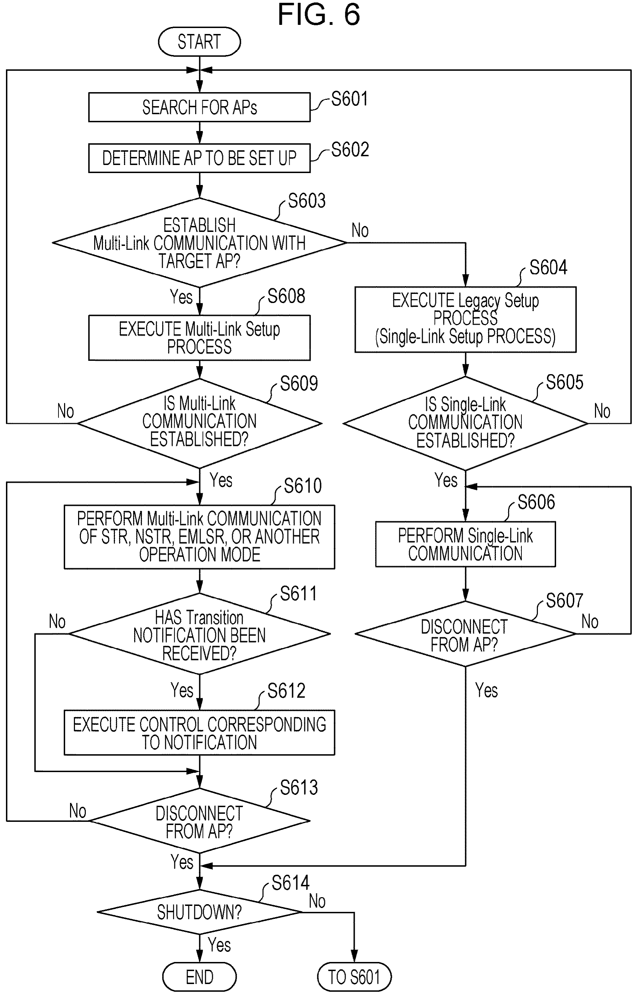

Next, specific control processes executed by the AP MLD 101 and the non-AP MLD 102 to perform Multi-Link communication illustrated in Fig. 4 will be described with reference to the flowcharts of Figs. 5 and 6.

The flowchart of Fig. 5 shows excerpts from the communication procedures executed by the AP MLD 101 with STAs such as the non-AP MLD 102 and the Legacy STA 103 that are counterpart devices. The processes of Fig. 5 are processes that are executed after electric power is supplied to the AP MLD 101 and the preparation for operation as an access point is complete. The flowchart of Fig. 6 shows excerpts from the communication procedures executed by the non-AP MLD 102 with APs such as the AP MLD 101 that is a counterpart device. The processes of Fig. 6 are processes that are executed after electric power is supplied to the non-AP MLD 102 and the preparation for operation as an STA is complete.

First, the control of the AP MLD 101 will be described with reference to Fig. 5. The processes shown in the flowchart of Fig. 5 are executed by the processor of the control unit 202 of the AP MLD 101 running a computer program stored in the storage unit 201. Some of the processes, such as transmission and modulation, are implemented through cooperation between the processor of the control unit 202 and various processors, ASICs, DSPs, and FPGAs that make up the communication unit 206, ASICs, DSPs, and FPGAs that make up the control unit 202, or the like. When the subject of the processes is intended to be clearly indicated, the functional sections described in Fig. 3 will be described as the subject.

In S501, the control section 301 determines whether the operational setting to enable the AP power saving mode has been made. When the control section 301 has made an operational setting to enable the AP power saving mode, the control section 301 proceeds with the process to S502; when the control section 301 has not made an operational setting to enable the AP power saving mode, the control section 301 proceeds with the process to S509.

Specifically, the control section 301 refers to the operational setting stored in the storage unit 201 and determines that the operational setting to enable the AP power saving mode has been made when the operational setting to enable the AP power saving mode is stored. On the other hand, the control section 301 refers to the operational setting stored in the storage unit 201 and determines that the operational setting to enable the AP power saving mode has not been made when the operational setting to disable the AP power saving mode is stored.

In S502, the control section 301 determines whether the AP MLD 101 is operating in the Active State in the AP power saving mode. When the AP MLD 101 is operating in the Active State in the AP power saving mode, the control section 301 proceeds with the process to S503. On the other hand, when the AP MLD 101 is not operating in the Active State in the AP power saving mode (that is, when the AP MLD 101 is operating in the Power Saving State), the control section 301 proceeds with the process to S505.

In S503, the control section 301 determines whether to transition the State of the power saving mode from the Active State to the Power Saving State. When the control section 301 determines to transition the State of the power saving mode from the Active State to the Power Saving State, the control section 301 proceeds with the process to S504. On the other hand, when the control section 301 determines not to transition the State of the power saving mode from the Active State to the Power Saving State, the control section 301 proceeds with the process to S508. Whether to transition can be determined based on whether the conditions for transitioning to the Power Saving State are satisfied, for example, whether the amount of data being transmitted and received becomes smaller than or equal to a predetermined amount.

In S504, the control section 301 cooperates with the frame generation section 305 to generate a Transition notification frame directed toward the non-AP MLD. Subsequently, the control section 301 transmits the Transition notification frame generated in cooperation with the transmission and reception section 306 and the communication unit 206.

In S505, the control section 301 determines whether to transition the State of the power saving mode from the Power Saving State to the Active State. When the control section 301 determines to transition the State of the power saving mode from the Power Saving State to the Active State, the control section 301 proceeds with the process to S506. On the other hand, when the control section 301 determines not to transition the State of the power saving mode from the Power Saving State to the Active State, the control section 301 proceeds with the process to S507. Whether to transition can be determined based on the occurrence of data to be transmitted and received or the like and a lapse of a predetermined period of time or the like.

In S506, the control section 301 cooperates with the frame generation section 305 to generate a Transition notification frame directed toward the non-AP MLD. Subsequently, the control section 301 transmits the Transition notification frame generated in cooperation with the transmission and reception section 306 and the communication unit 206.

Subsequently, in S507, the control section 301 cooperates with the units and sections to cause the Affiliated AP1 and AP2 to operate in the doze state and cause the Affiliated AP3 to operate in the awake state. The control section 301 cooperates with the generation section 305, the transmission and reception section 306, and the communication unit 206 to execute the process of regularly transmitting a Beacon identified by BSSID1, which is the Beacon of the Affiliated AP1, on the operating channel of the Affiliated AP1. In other words, the control section 301 regularly transmits a Beacon of BSSID1 that identifies the NW 100 on the channel providing the NW 100.

Next, a Beacon transmission operation in the Active State will be described. In S506, the control section 301 cooperates with the units and sections to cause the Affiliated AP1 to AP3 to operate in the awake state. At this time, the control section 301 cooperates with the generation section 305, the transmission and reception section 306, and the communication unit 206 to execute the process of regularly transmitting a Beacon of the Affiliated AP1 on the operating channel of the Affiliated AP1. At this time, the control section 301 executes control not to transmit Beacons (a Beacon identified by BSSID2 and a Beacon identified by BSSID3) of the Affiliated AP2 and AP3 operating in the awake state.

Next, the control of the case where the operational setting to enable the AP power saving mode has not been made will be described. In S509, the control section 301 cooperates with the units and sections to cause the Affiliated AP1 to AP3 to operate in the awake state. At this time, the control section 301 cooperates with the generation section 305, the transmission and reception section 306, and the communication unit 206 to execute the process of regularly transmitting Beacons. More specifically, the control section 301 executes the process of regularly transmitting a Beacon of the Affiliated AP1 on the operating channel of the Affiliated AP1 and regularly transmitting a Beacon of the Affiliated AP2 on the operating channel of the Affiliated AP2. Furthermore, the control section 301 executes the process of regularly transmitting a Beacon of the Affiliated AP3 on the operating channel of the Affiliated AP3.

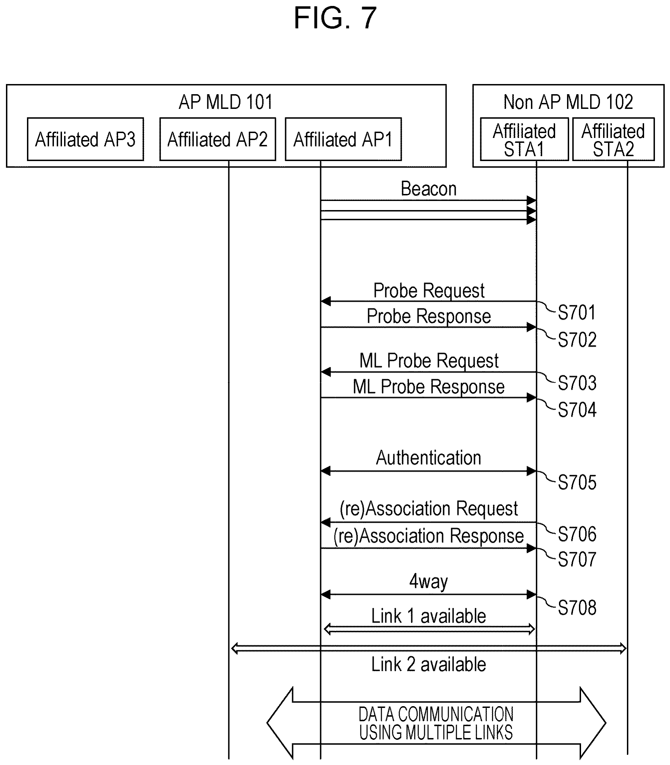

In S510, the control section 301 executes a link setup process and a data transmission process. The processes will be described later with reference to Fig. 7.

In S511, the AP MLD 101 determines whether to perform a shutdown. When the AP MLD 101 determines to perform a shutdown, the AP MLD 101 executes a shutdown process (not shown), ends the series of the processes, and transitions to a power off state. On the other hand, when the AP MLD 101 determines not to perform a shutdown, the AP MLD 101 proceeds with the process to S501.

In the above control, the process of stopping the regular transmission of a Beacon frame as a target has been illustrated as a typical example; however, the AP MLD 101 further controls not to respond to other frames that can be transmitted from a Legacy STA for connection. Specific control will be described with reference to Table 1. The AP MLD 101 configured with the AP power saving mode enabled differentiates the frame transmission control shown in Table 1 between the Affiliated AP1 that maintains the awake state and the other Affiliated AP2 and AP3 that can transition to the doze state.

**[Table 1]**

| Type | Subtype | MAC Frame Name | Control as Affiliated AP2 to AP3 | Control as Affiliated AP1 |
|---|---|---|---|---|
| 0b00 | 0b1000 | Beacon | Stop Regular Transmission | Regularly Transmit |
| 0b00 | 0b0101 | Probe Response | Not Respond to Probe Request | Respond to Probe Request |
| 0b00 | 0b0001 | Association Response | Not Respond to Association Request | Respond to Association Request |

The control as described in the above-described typical example just needs to be executed for the Beacon frame in which the type field is set to "0b00" and the subtype field is set to "0b1000". Furthermore, the AP MLD 101 configured with the AP power saving mode enabled causes the Affiliated AP2 and AP3 not to respond with Probe Response frames to Probe Request frames that the Affiliated AP2 and AP3 are supposed to respond to. The AP MLD 101 configured with the AP power saving mode enabled causes the Affiliated AP2 and AP3 not to respond with Association Response frames to Association Request frames addressed to the Affiliated AP2 and AP3. With the above control, it is possible to reduce the discovery of Affiliated AP2 and AP3 through active scanning by Legacy STAs. It is also possible to reduce the connection of Legacy STAs to the Affiliated AP2 and AP3 based on the communication parameters input by users to the Legacy STAs. It is also applicable to respond with an Association Response frame notifying that Association is unsuccessful to the Association Request. In this case, it is sufficient that the AP MLD 101 transmits an Association Response frame with a Status code other than Success.

With the process described above, an access point is able to perform a power saving operation while suppressing the occurrence of connection issues with Legacy STAs in an environment where Legacy STAs are mixed.

Next, the control of the non-AP MLD 102 that is a counterpart device will be described with reference to Fig. 6. The processes shown in the flowchart of Fig. 6 are executed by the processor of the control unit 202 of the non-AP MLD 102 running a computer program stored in the storage unit 201. Some of the processes, such as transmission and modulation, are implemented through cooperation between the processor of the control unit 202 and various processors, ASICs, DSPs, and FPGAs that make up the communication unit 206, ASICs, DSPs, and FPGAs that make up the control unit 202, or the like. When the subject of the processes is intended to be clearly indicated, the functional sections described in Fig. 3 will be described as the subject.

In S601, the control section 301 of the non-AP MLD 102 cooperates with the frame transmission and reception section 306 and the communication unit 206 to search for surrounding APs. Searching is performed through a passive scan, an active scan to transmit a probe request to surroundings, or the like.

In S602, the control section 301 determines an AP to be set up. Examples of the determination include a process of determining a target by prompting a user to select from among a plurality of listed APs found by searching and a process of automatically determining an AP to which the non-AP MLD 102 has connected in the past and that has a good radio wave intensity.

Subsequently, in S603, the control section 301 determines whether to establish Multi-Link communication with the AP determined to be set up. When the control section 301 determines to establish Multi-Link communication with the AP determined to be set up, the control section 301 proceeds with the process to S608. On the other hand, when the control section 301 determines not to establish Multi-Link communication with the AP determined to be set up (that is, when the control section 301 determines to establish one link with the AP determined to be set up), the control section 301 proceeds with the process to S604.

In S604, the control section 301 cooperates with the units and sections to execute a Legacy Setup process (in other words, a Single-Link Setup process). This process corresponds to the Authentication process, the Association process, and the 4way-handshake process that use MAC frames not containing a Multi-Link Element and that have been executed in compliant with the standards up to IEEE 802.11ax.

In S605, the control section 301 determines whether Single-Link communication is established. When Single-Link communication is established, the control section 301 proceeds with the process to S606; when Single-Link communication is not established, the control section 301 proceeds with the process to S601 and executes a search process and a determination process for a new AP to be set up.

In S606, the control section 301 performs Single-Link communication with the AP that has established a connection in cooperation with the units and sections. In S607, the control section 301 determines whether to disconnect from the AP. When the control section 301 determines to disconnect from the AP, the control section 301 proceeds with the process to S614; when the control section 301 determines not to disconnect from the AP, the control section 301 proceeds with the process to S606 again and performs Single-Link communication.

Next, a case of performing Multi-Link communication will be described. In S608, the control section 301 cooperates with the units and sections and the AP MLD (for example, the AP MLD 101) that is a counterpart device to execute a Multi-Link Setup process.

The Multi-Link Setup process will be described with reference to Fig. 7. Fig. 7 is a sequence diagram that shows the Multi-Link Setup process by the AP MLD 101 and the non-AP MLD 102 and a subsequent communication procedure.

As described above, the AP MLD 101 regularly transmits a Beacon of the Affiliated AP1.

The Affiliated AP1 of the AP MLD 101 and the non-AP MLD 102 exchange a Probe Request and a Probe Response (S701, S702). The request may include a Multi-Link Element.

Subsequently, the STA 102 and the AP 101 exchange an ML Probe Request (S703) and an ML Probe Response (S704) to obtain information regarding each link. The ML Probe Request is a Probe Request that includes Complete Profile Requested that requests a Complete Profile, as a Multi-Link Element. Through this frame exchange, information regarding each link that can be used for Multi-Link communication, other capability information related to Multi-Link communication, and the like, are exchanged.

S703 and S704 are frame exchanges to obtain detailed link information that could not be acquired through the Probe Response. Therefore, when the connection has been performed multiple times and parameters have been exchanged during past connections, the frame exchange in S703 and S704 can be omitted.

Subsequently, the AP MLD 101 and the non-AP MLD 102 execute processes for Authentication and perform authentication between devices (S705).

Subsequently, the non-AP MLD 102 transmits an Association Request to the AP as a connection request (S706). The connection request transmitted here may be a Re Association Request.

The STA 102 incorporates information that identifies connection target links, with which Multi-Link communication is intended to be established, in the Association Request. In the present embodiment, the STA 102 transmits a notification of the link IDs that identify the connection target links to the AP MLD 101 using the Multi-Link Element. More specifically, the STA 102 indicates which links are requested to be used to establish connection by storing a plurality of connection target link IDs in a Per-STA Profile of the Multi-Link Element.

The AP 101 receiving the Association Request responds with an Association Response (S707).

Subsequently, the AP MLD 101 and the non-AP MLD 102 perform a 4way-handshake to generate a key for encrypted communication (S708). When a key exchange for authentication and encryption is complete, the STA 102 and the AP 101 enter a state of being able to perform data frame communication.

The AP MLD 101 and the non-AP MLD 102 in a state of being able to perform data frame communication transmit and receive application data, typically such as pictures, video, and audio.

Using the procedure described above, the AP 101 and the STA 102 can establish connection for Multi-Link communication.

The description returns to Fig. 6. Subsequently, in S609, the control section 301 determines whether Multi-Link communication is established. When Multi-Link communication is established, the control section 301 proceeds with the process to S610; when Multi-Link communication is not established, the control section 301 proceeds with the process to S601 and executes a search process and a determination process for a new AP to be set up.

In S610, the control section 301 performs Multi-Link communication with the AP MLD (for example, the AP MLD 101) that has established a connection in cooperation with the units and sections. The Operation mode during communication may be a Nonsimultaneous transmit and receive (NSTR) operation. Alternatively, the Operation mode during communication may be a Simultaneous transmit and receive (STR) operation. Alternatively, the Operation mode during communication may be an enhanced multi-link single radio (EMLSR) operation. Furthermore, alternatively, the Operation mode during communication may also be an enhanced multi-link multi-radio (EMLMR) operation.

In S611, the control section 301 cooperates with units and sections to determine whether a Transition notification has been received from the connected AP MLD (for example, the AP MLD 101). When a Transition notification has been received, the control section 301 proceeds with the process to S612; when a Transition notification has not been received, the control section 301 proceeds with the process to S613. In S612, the control section 301 executes control corresponding to the Transition notification in cooperation with the units and sections. For example, in the case of a notification related to a transition to the Power Saving State, the control section 301 may cause some Affiliated STAs to transition to the doze state. For example, in the case of a notification related to a transition to the awake State, the control section 301 may transition some Affiliated STAs to the awake state. The Transition notification is desirably a frame in the format that can be interpreted by non-AP MLDs that do not support the 802.11bn standard and support the 802.11be standard; however, the configuration is not limited thereto.

For example, for non-AP MLDs that support only the 802.11be standard, the control section 301 may handle the case where some Affiliated APs transition to the doze state, by transmitting a request to remove the links or transmitting a request to add links. Specifically, when the Affiliated AP2 and AP3 transition to the Power Saving State, the control section 301 transmits a request to remove the links to the Affiliated AP2 and AP3 to transition to a state where only the link to the Affiliated AP1 kept awake is available. When the Affiliated AP2 and AP3 transition to the Active State, the control section 301 may also perform handling, such as transmitting a request to add links to the Affiliated AP2 and AP3 to increase the number of links. In this case, it is sufficient that the AP MLD 101 defines new control frames as needed for non-AP MLDs that support the 802.11bn standard and use those frames for notifications.

In S613, the control section 301 determines whether to disconnect from the AP. When the control section 301 determines to disconnect from the AP, the control section 301 cooperates with the units and sections to transmit a Disassociation frame or a Deauthentication frame to the AP to disconnect from the AP MLD and proceeds with the process to S614. On the other hand, when the control section 301 determines not to disconnect from the AP, the control section 301 proceeds with the process to S610 to further perform Multi-Link communication.

In S614, the non-AP MLD 102 determines whether to perform a shutdown. When the non-AP MLD 102 determines to perform a shutdown, the non-AP MLD 102 executes a shutdown process (not shown), ends the series of the processes, and transitions to a power off state. On the other hand, when the non-AP MLD 102 determines not to perform a shutdown, the non-AP MLD 102 proceeds with the process to S601.

Through the series of processes described above, it is possible to appropriately connect to the AP MLD configured with the AP power saving mode enabled, and it is also possible to switch the power saving state of the STA in conjunction with the State of the AP based on a Transition notification.

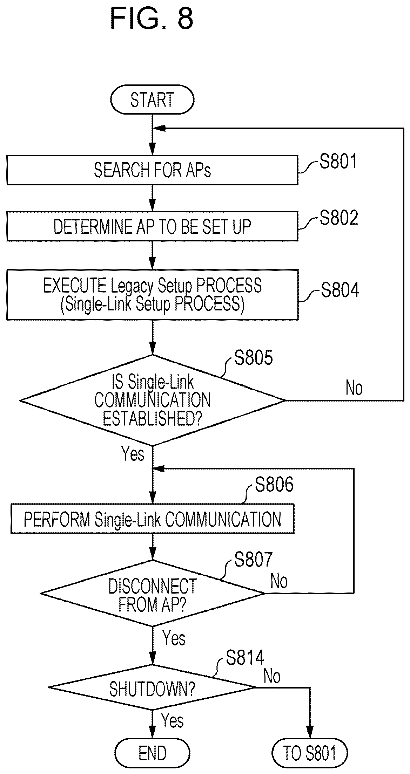

Finally, the control of the Legacy STA 103 will be described with reference to Fig. 8. Fig. 8 is a flowchart that shows an example of control of the Legacy STA 103. The processes shown in the flowchart of Fig. 8 are executed by the processor of the control unit 202 of the Legacy STA 103 running a computer program stored in the storage unit 201. S801 to S802 are search and determination controls similar to S601 to S602. The Legacy STA 103 does not support the Multi-Link function, so the process proceeds to S804 that is a single-sink connection process after the determination, which differs from the processes of Fig. 6.

The connection and communication processes for Single-Link in S804 to S808 are similar to the processes of S604 to S608. The shutdown process of S814 is also a process similar to S614.

The Affiliated AP1 will be found even in the search performed by the Legacy STA 103. Therefore, the Legacy STA 103 is able to appropriately establish Single-Link. The Affiliated AP1 always operates in the awake state and does not transition to the doze state, so it is possible to avoid unstable connections and communication.

### (Modification 1)

In the above-described embodiment, in the illustrated example, the AP MLD 101 configured with the AP power saving mode enabled causes the Affiliated AP2 and AP3 that can enter the doze state not to transmit frames for connection. On the other hand, it is also possible to provide a new management frame that reports, notifies, or responds with information for connection to STAs supporting IEEE 802.11bn and later. This new management frame is a MAC frame that has been assigned different types and subtypes compared to the MAC frames defined up to IEEE 802.11be. This new management frame cannot be interpreted by STAs that do not support the IEEE 802.11bn standard and later and will be discarded. The Affiliated AP2 and AP3 can also be configured to regularly transmit, respond, and notify such a new management frame for reporting, notifying, and responding with information for connection. When a Beacon in a frame format that has a preamble that allows to identify a PPDU supporting the IEEE 802.11bn standard or later is used, the Affiliated AP2 and AP3 may be configured to regularly transmit Beacons. For example, when a frame encapsulates a Beacon frame as a MAC frame for the payload of a UHR PPDU format PPDU, the Affiliated AP2 and AP3 may also be configured to regularly transmit the frame. In this case, the AP MLD 101 may regularly transmit a UHR PPDU storing a Beacon frame of BSSID2 on the channel of the NW 110, and may also regularly transmit a UHR PPDU storing a Beacon frame of BSSID3 on the channel of the NW 120. In other words, when a frame of a type that cannot be decoded by STAs not supporting the IEEE 802.11bn standard is used, the Affiliated AP2 and AP3 can also be configured to transmit a frame that notifies an external device of information regarding the presence of the frame.

### (Modification 2)

Furthermore, the AP MLD 101 may respond to Probe Requests and Association Requests to be responded by the Affiliated AP2 and AP3 that can transition to the doze state when specific conditions are satisfied. Specifically, the AP MLD 101 can be configured to provide a corresponding response to a Probe Request or an Association Request that includes a Multi-Link Element. When a Probe Request or Association Request frame that has been received from an STA that supports the IEEE 802.11bn standard or later is identified, a response may also be made to that frame.

### (Modification 3)

Furthermore, the AP MLD 101 may be configured to transmit, through the Affiliated AP1 in the always awake state, a frame indicating a time period during which another Affiliated AP is in the awake state or doze state. The frame is assigned a type and subtype different from those of the frames defined up to IEEE 802.11be. In this case, it is sufficient that the non-AP MLD 102 is configured to interpret the frame indicating a time period and change its power state or the like as needed. The Affiliated AP2 and AP3 in the awake state can be configured to transmit the frame indicating a time period. The frame described in Modification 3 may be a frame having a preamble that allows to identify a PPDU supporting the IEEE 802.11bn standard or later. Furthermore, this frame may be a frame of a type that can only be decoded by STAs that support the IEEE 802.11bn standard or later and that cannot be decoded by Legacy STAs. The frame described in Modification 3 may be transmitted periodically.

### (Modification 4)

In the first embodiment and the above-described modifications, the case where the Affiliated AP1 that provides a 2.4 GHz band network is in the always awake state has been illustrated; however, the configuration is not limited thereto. For example, in addition to those modes, it is applicable that users and administrators are allowed to set an Affiliated AP to the always awake state. This modification will be described with reference to Fig. 9. A display item 904 is a pull-down list that allows a user to select a network that is always activated. The UI section 302 displays options, such as BSSID, Service Set Identifier (SSID), and the operating frequency band of the network, as options in the pull-down list. The user can perform a change operation to change the network that is always activated by performing an operation to select one option from among the plurality of options displayed in the pull-down list.

When the UI section 302 detects that the OK button is pressed after detecting a change operation to 904, the UI section 302 stores the operational setting made through the settings screen of Fig. 9 in the storage unit 201. In this case, the control section 301 of the AP MLD 101 determines the Affiliated AP that is always activated based on the operational setting.

At this time, the control section 301 may be configured to present information 905 that assists the user in making a selection. For example, if the user has an old station (STA), information or the like recommending a 2.4 GHz band can be displayed.

### (Modification 5)

In the first embodiment and the above-described modifications, the case where the Multi-Link function is used in the AP MLD 101 has been illustrated. On the other hand, in addition to those modes, it is applicable that whether to use the Multi-Link function can be selected through a user operation. In this case, the AP MLD 101 is configured to switch between the operational settings that use the Multi-Link function based on the change operation to a display item 901 on the settings screen of Fig. 9 and the operational settings that do not use the Multi-Link function. When the UI section 302 detects that the OK button is pressed after detecting a change operation to 901, the UI section 302 stores the corresponding operational setting in the storage unit 201. Then, when the operational setting to use the Multi-Link function is made, the AP MLD 101 executes the process described in the above-described embodiment and modifications. On the other hand, when the operational setting to use the Multi-Link function is not made, it is sufficient that the AP MLD 101 operates as an access point that merely supports a multiband.

When the operational setting to use the Multi-Link function is made, it is possible to prompt the user to select the network to be used in Multi-Link communication. In this case, the user can designate a network that allows to establish Multi-Link communication by operating a display item 902. When the UI section 302 detects that the OK button is pressed after detecting a change operation to 903, the UI section 302 stores the corresponding operational setting in the storage unit 201. The AP MLD 101 varies the link information to be notified during the Multi-Link Setup process based on the operational setting. For example, when a network supporting the Affiliated AP1 and the Affiliated AP2 is designated, the AP MLD 101 treats only the Affiliated AP1 and AP2 as the communication links with which a Multi-Link connection can be established.

### (Modification 6)

The AP MLD 101 may be configured to include a color Light Emitting Diode (LED) that indicates status as the output unit 205. In this case, the AP MLD 101 may differentiate the display mode of the color LED between when operating in the Power Saving State and when operating in the Active State. When operating in the Active State, it is sufficient that the LED always turn on to display green, white, or the like. When operating in the Power Saving State, it is sufficient to always turn on orange, to use blinking, or the like.

### (Other Embodiments)

The present invention may also be implemented by a process in which a program that implements one or more functions of the above-described embodiment is supplied to a system or an apparatus via a network or a storage medium and one or more processors in a computer of the system or the apparatus read and run the program. Alternatively, the present invention may be implemented by a circuit (for example, ASIC) that implements one or more functions.

The present invention is not limited to the above-described embodiment. Various changes and modifications are applicable without departing from the spirit and scope of the present invention. Therefore, the following claims are attached to show the scope of the present invention.

This application claims the benefit of Japanese Patent Application No. 2023-095004 filed June 8, 2023, which is hereby incorporated by reference herein in its entirety.

### Reference Signs List

- 101: AP MLD
- 102: non-AP MLD
- 103: Legacy STA
- 206: communication unit

## Claims

1. A communication apparatus that provides an external apparatus with a first network identified by a first Basic Service Set Identifier, first BSSID, and a second network identified by a second BSSID, the communication apparatus comprising
a communication control unit configured to, in a case where the communication apparatus uses a predetermined power saving mechanism and the communication apparatus functions as a Multi-Link Device, MLD, that performs Multi-Link communication with another communication apparatus, execute control to transmit a Beacon frame containing the first BSSID on a channel through which the communication apparatus is providing the first network and not to transmit a Beacon frame containing the second BSSID on a channel through which the communication apparatus is providing the second network.

2. The communication apparatus according to claim 1, wherein
the communication apparatus is an access point device,
the predetermined power saving mechanism has a first state and a second state as operational states, and electric power is less consumed in the second state than in the first state, and
the communication control unit is configured to, even in a case where the access point device operates in the second state, transmit a Beacon frame containing the first BSSID on the channel through which the first network is being provided.

3. The communication apparatus according to claim 2, wherein the communication control unit is configured to execute control not to transmit a Probe Response frame and/or an Association Response frame in addition to a Beacon frame on the channel through which the communication apparatus is providing the second network.

4. The communication apparatus according to claim 2 or 3, wherein
the second state is a state where some of a plurality of affiliated APs that can be used for Multi-Link communication are caused to operate in a doze state, and
the communication control unit is configured to further transmit a frame notifying a period during which the some of the plurality of Affiliated APs are in an awake state and/or a period during which the some of the plurality of Affiliated APs are in a doze state, on the channel through which the communication apparatus is providing the first network.

5. The communication apparatus according to any one of claims 1 to 4, further comprising
a selection unit configured to, in a case where the communication apparatus uses the predetermined power saving mechanism, select a network through which a Beacon frame is to be transmitted, wherein
the network selected by the selection unit is the first network.

6. The communication apparatus according to claim 5, wherein the selection unit is configured to select a network, through which a Beacon frame is to be transmitted, based on a user operation performed via a settings screen.

7. The communication apparatus according to any one of claims 1 to 6, wherein the Beacon frame is a Medium Access Control, MAC, frame in which 00 is set for a type field and 1000 is designated for a subtype field.

8. The communication apparatus according to claim 7, wherein the communication control unit is configured to transmit a frame that is of a type that a station device not supporting an IEEE 802.11bn standard cannot decode and that notifies an external device of information regarding presence of the communication apparatus, additionally on the channel through which the communication apparatus is providing the second network.

9. A communication apparatus that provides an external apparatus with a first network identified by a first Basic Service Set Identifier, first BSSID, and a second network identified by a second BSSID, the communication apparatus comprising
a communication control unit configured to, in a case where the communication apparatus uses a predetermined power saving mechanism and the communication apparatus functions as a Multi-Link Device, MLD, that performs Multi-Link communication with another communication apparatus, execute control to transmit a non-HT PPDU-format wireless frame including a Beacon frame containing the first BSSID on a channel through which the communication apparatus is providing the first network and transmit a UHR PPDU-format wireless frame including a Beacon frame containing the second BSSID on a channel through which the communication apparatus is providing the second network.

10. A control method for a communication apparatus that provides an external apparatus with a first network identified by a first BSSID and a second network identified by a second BSSID, the control method comprising
a communication control step of, in a case where the communication apparatus uses a predetermined power saving mechanism and the communication apparatus functions as a Multi-Link Device, MLD, that performs Multi-Link communication with another communication apparatus, executing control to transmit a Beacon frame containing the first BSSID on a channel through which the communication apparatus is providing the first network and not to transmit a Beacon frame containing the second BSSID on a channel through which the communication apparatus is providing the second network.

11. A program for causing a computer to execute the control method for a communication apparatus according to claim 10.
